# EUROPEAN PATENT SPECIFICATION

(11) **EP 3 790 750 B1**
(45) Date of publication and mention of the grant of the patent: **10.04.2024**
(21) Application number: 18733668.0
(22) Date of filing: 09.05.2018
(51) Int. Cl.: B60H 1/32, F02N 11/08

(54) **POWER MANAGEMENT OF TRANSPORTATION REFRIGERATION UNIT**
ENERGIEVERWALTUNG FÜR TRANSPORTKÜHLEINHEIT
GESTION D'ÉNERGIE D'UNITÉ DE RÉFRIGÉRATION DE TRANSPORT

(43) Date of publication of application: 17.03.2021
(73) Proprietor: Carrier Corporation, Palm Beach Gardens, FL 33418 (US)
(72) Inventor: DUCHER, Gaël, 76520 Franqueville Saint Pierre (FR)
(74) Representative: Lavoix
(86) International application number: PCT/IB2018/000597
(87) International publication number: WO 2019/215468

(56) References cited:
- WO-A1-2010/002644
- JP-A- 2017 030 381
- US-A- 5 186 015
- US-A- 5 557 938

## Description

### BACKGROUND

Exemplary embodiments pertain to the art of transportation refrigeration units and more specifically to power management of transportation refrigeration units.

Engineless transport refrigeration units (TRU) may rely on power from a truck engine to run TRU cooling systems and regulate the box temperature. If the box temperature is outside an acceptable range while the truck engine is off, the TRU may be unable to properly regulate the box temperature.

US 5, 186,015 A discloses a transport refrigeration unit for a vehicle, which includes a refrigerant compressor driven by the vehicle engine. Sensors and control determine when the engine may be safely started and stopped under control of the transport refrigeration unit. A comparison between a cargo temperature and a set point temperature determines when a refrigeration cycle is required to maintain the set point temperature, and when the cargo space temperature is satisfied. The engine is started, when off, when the engine can be safely started and the cargo space requires a refrigeration cycle to maintain the set point temperature. The engine is stopped, when running, when the engine can be safely stopped and the cargo space is satisfied.

JP 2017 030381 A discloses a hybrid vehicle comprising a power source composed of a combination of an engine and an electric motor, which uses rotating power of the engine as a drive source for a refrigerator compressor. The vehicle comprises an idle stop function that stops the engine when the vehicle is stopped. If the temperature of the interior of a refrigeration chamber of the vehicle becomes equal to or lower than an upper limit temperature higher than a target temperature by a predetermined temperature even during the drive of the refrigerator compressor, and if the temperature of the interior of the refrigeration chamber exceeds the upper limit temperature after decreasing to or below the upper limit value, the drive of the refrigerator compressor is stopped to allow execution of the idle stop function.

### BRIEF DESCRIPTION

The invention as defined in claim 1 comprises a transportation refrigeration unit (TRU) for conditioning air in a cargo box, the TRU including a TRU controller that is electronically connected to a truck engine controller, wherein when a delta between a cargo box temperature and a cargo box set point temperature is greater than a predetermined threshold, the TRU controller: actuates the truck engine when the truck engine is off after determining that predetermined safety conditions are satisfied, and conditions air in the cargo box to return the cargo box temperature to the set point temperature, wherein the predetermined safety conditions include an amount of fuel onboard the truck being above a threshold amount, and wherein the TRU is engineless.

In addition to one or more of the above disclosed features or as an alternative the TRU controller draws power from the truck engine to power the TRU components until the cargo box temperature is proximate the set-point temperature.

In addition to one or more of the above disclosed features or as an alternative the TRU controller turns the engine off when the cargo box temperature is proximate the set point temperature.

In addition to one or more of the above disclosed features or as an alternative the TRU controller determines that the truck engine is actuated and thereafter draws power from the truck engine to power the TRU components until the cargo box temperature is proximate the set-point temperature.

In addition to one or more of the above disclosed features or as an alternative the TRU includes a thermometer in the cargo box, the thermometer being in electronic communication with the TRU controller, and the actual temperature in the cargo box is temperature read dynamically by the TRU controller in communication with the thermometer.

In addition to one or more of the above disclosed features or as an alternative the TRU controller communicates with the truck engine controller over a controller area network (CAN).

In addition to one or more of the above disclosed features or as an alternative the TRU components include a compressor, an evaporator, a condenser, and a fan.

The invention further comprises a method for maintaining a cargo box set point temperature in a transportation refrigeration unit (TRU) as defined in claim 8.

### BRIEF DESCRIPTION OF THE DRAWINGS

The following descriptions should not be considered limiting in any way. With reference to the accompanying drawings, like elements are numbered alike:
FIG. 1 is an ecosystem not according to the invention, for the disclosed embodiments:
FIG. 2 is a process for managing power in a transportation refrigeration unit (TRU) according to an embodiment;
FIG. 3 is a process for managing power in a TRU according to an embodiment;
FIG. 4 is a process for managing power in a TRU according to an embodiment; and
FIG. 5 is a process for managing power in a TRU according to an embodiment.

### DETAILED DESCRIPTION

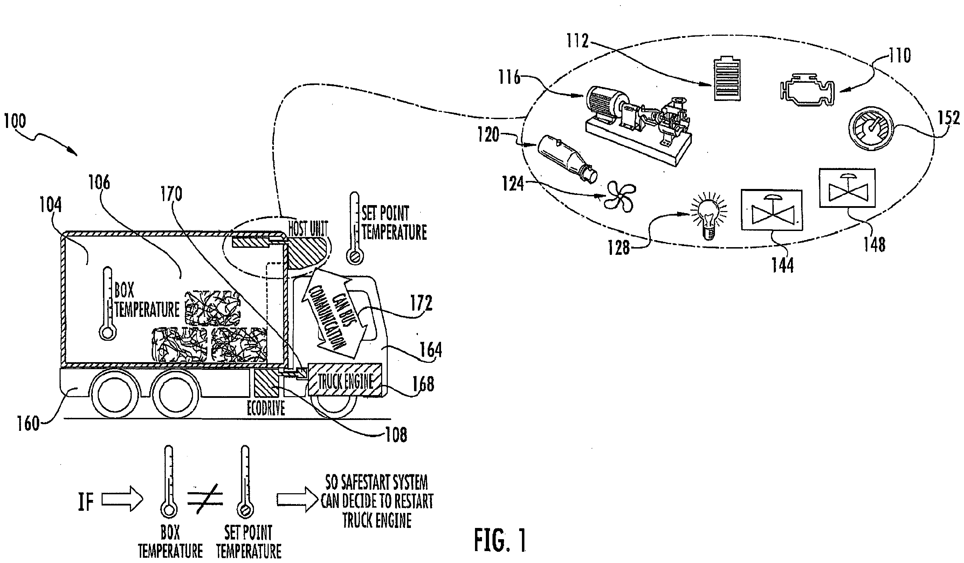

With reference to FIG. 1, illustrated is an exemplary system 100 for applying the invention. A transportation refrigeration unit (TRU) 104 is illustrated which includes a cargo area 106 and a TRU controller 108, wherein the TRU controller 108 is further defined below. One example TRU controller 108 may be an Eco-Drive power module by Carrier Corporation, which is brand of the Climate, Controls & Security division of United Technologies Corporation.

The TRU controller 108 may control a plurality of TRU components, including a plurality of TRU power supply components and a plurality of power demand components. The TRU power supply components of exemplary embodiments may include a TRU engine 110, though according to the invention, the TRU is engineless, and a TRU battery 112. The plurality of TRU power demand components may include powered cooling components including a compressor 116 which may be a variable compressor. The TRU power demand components may further include an evaporator/condenser 120 with an associated fan 124. In addition, the power demand components may include the TRU controller 108, cargo lights 128, a plurality of cooling valves including an expansion valve 144 and a suction modulation valve 148. In addition, the TRU controller 108 may communicate with a cargo sensor 152 disposed in the cargo storage area 106. The cargo sensor may be, for example, a thermal sensor. Temperature read by the sensor 152 is sometimes referred to as a box temperature.

The TRU 104 may be disposed on a trailer 160 hauled by a truck 164. The truck 164 may have an engine 168 which may run on a fossil fuel. The truck 164 may also have an engine controller 170, which may be an electronic controller. Electronic communications between the TRU controller 108 and the engine controller 170 may be accomplished with Controller Area Network (CAN) bus communication protocols over a CAN bus 172, illustrated schematically. The CAN bus was developed by Robert Bosch GmbH and originally released by the International Organization for Standardization (ISO) as ISO 11898, is a message-based protocol adopted as a vehicle bus standard. The CAN bus allows microcontrollers and devices to communicate with each other in applications without a host computer. CAN bus protocols use the on-board diagnostics (OBD)-II vehicle diagnostics standard.

The TRU controller 108 may be programmed to keep the TRU cargo area 106 at a first temperature, which may be a set point temperature. Over time, the temperature of the cargo area 106 may rise, requiring the TRU controller 108 to run the TRU components to cool the cargo area 106. Since, according to the invention, the TRU is engineless, the TRU controller 108 may be required to tap energy off of a running truck engine 168. However, the truck engine 168 may be turned off at rest stops, pit stops or the like.

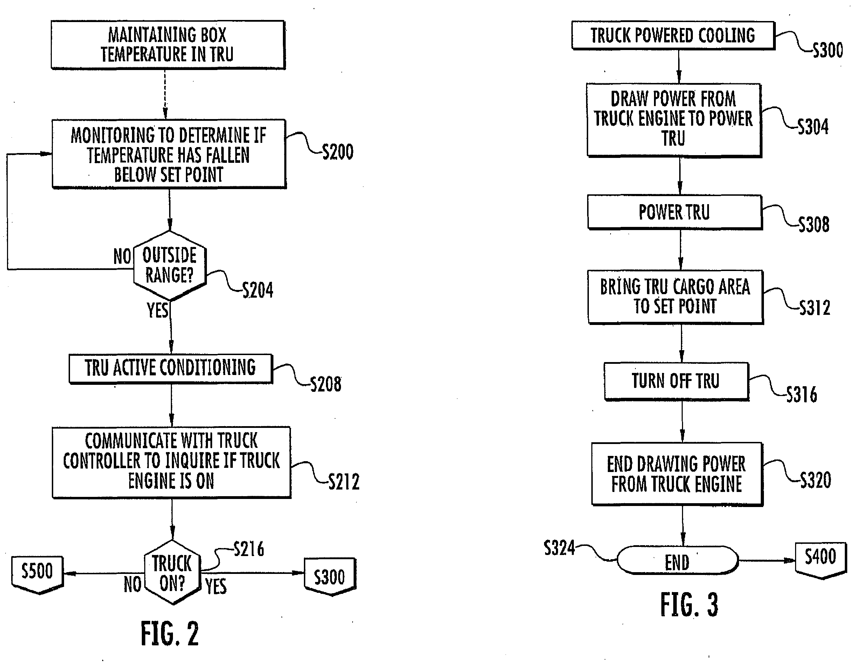

Turning to FIG. 2, a process is illustrated for maintaining a box temperature throughout a duration of a haul including when the truck engine 168 is turned off. The process includes a first step S200 of monitoring for when the cargo area temperature has fallen below a set point. For example, the TRU controller 108 identifies when a predetermined delta in temperature has been reached by reading a second temperature, which is the actual temperature, and comparing the second temperature with the first temperature. So long as the temperature of the cargo area 106 is within a predetermined acceptable range, at step S204 the controller will cycle back to S200.

When the determination at step 5204 is "yes" then the TRU controller 108 advances to step S208 of executing a TRU active conditioning step, that is, a step of aligning the box temperature with the temperature set point. Step S208 includes step S212 of determining if the truck engine is on. This occurs by the TRU controller 108 communicating with the engine controller 170 over the CAN bus 172. If the truck engine is running, then the determination at step S216 is "yes".

Turning to FIGS. 2 and 3, with a "yes" determination at step S216, the TRU controller 108 will execute a truck powered conditioning step at step S300. Step S300 includes step S304 of drawing power from the truck engine 168, powering the TRU components at step S308, conditioning the TRU cargo area 106 to the set point at step S312, powering off the TRU components at step S316, and cease drawing power from the truck engine 168 at step S320. The truck powered conditioning step then ends at step S324.

As illustrated with FIGS. 2, 3 and 4, with the truck powered conditioning step completed at step S324, the TRU controller 108 advances to the truck engine management step at step S400. Step S400 includes step S404 of determining whether the truck engine 168 was running/actuated (that is, "on") before executing the truck powered conditioning step S300. If the truck engine 168 was running then at answer is "yes" then at step S408 the TRU controller 108 cycles to step 5200. If the determination at step S408 is "no" then the TRU controller 108 instructs the engine controller 170 to turn off the truck engine 168 at step S412. Thereafter the TRU controller 108 cycles back to step S200.

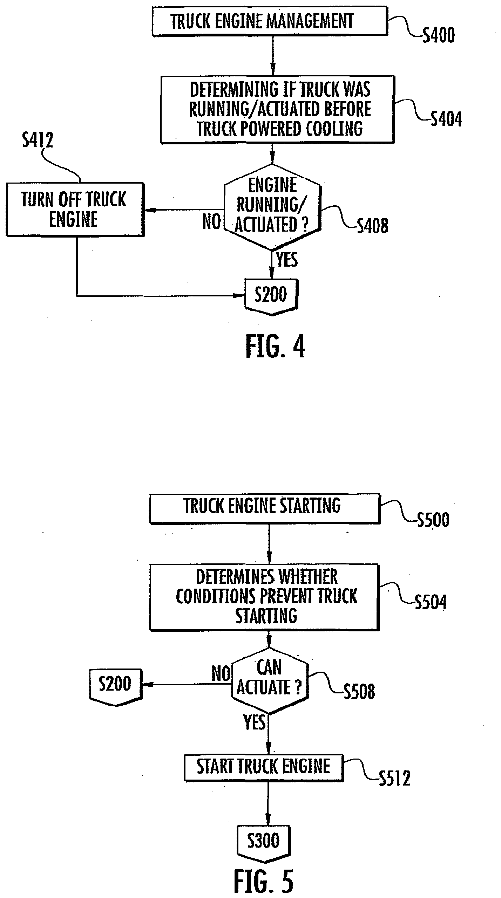

Turning to FIGS. 2 and 5 if the determination at step S216 is "no" then the TRU controller 108 executes a truck engine 168 starting or actuating step at step S500. Step S500 includes step S504 of communicating with the engine controller 170 to determine if safety conditions prevent starting of the truck engine 168 at that time. Various conditions may prevent the truck engine 168 from starting. Such conditions may include the configuration of the truck transmission. For example, in a manual transmission, if the truck is parked in a non-neutral gear, then starting the engine could cause unintended lurching of the truck, grinding of transmission gears, as well as immediate engine stall. In addition, if fuel levels in the truck are low, starting the truck may lead to unintentionally depleting the truck engine 168 of fuel during a haul.

If the truck engine 168 cannot be started then at step S508 the determination is "no" and the TRU controller 108 cycles back to step S200. If the determination at step S508 is "yes" then at step S512 the truck engine is caused to start running. Then the TRU controller 108 advances to the truck powered conditioning step S220.

This system may allow avoiding a situation where a truck engine is left on when not needed when truck is stopped. The above disclosed embodiments provide an electronic control, which may be in the form of software and/o hardware, of an engine of a truck transporting, which is box truck engine. The management of the system is based on a difference or delta of the temperatures between a first temperature which a predetermined temperature set point within the TRU and a second temperature which is the actual TRU temperature, referred to as the box temperature. The disclosed embodiments provide various benefits, including an unbroken chain of cold temperatures for contents in the TRU, preventing food waste. The disclosed embodiments also provide autonomy to engineless/direct drive units so that human error is removed. Further, there is a reduction in fuel burn as the truck engine is only operated as needed. The disclosed embodiments are applicable to various forms of transportation, including but not limited to small trucks, vans and other forms of light commercial vehicles, often referred to as LCVs.

As used herein, the term controller, including but not limited to as used with the TRU controller 108, refers to processing circuitry that may include an application specific integrated circuit (ASIC), an electronic circuit, an electronic processor (shared, dedicated, or group) and memory that executes one or more software or firmware programs, a combinational logic circuit, and/or other suitable interfaces and components that provide the described functionality. For example, processors processes data stored in the memory and employ the data in various control algorithms, diagnostics and the like.

In terms of hardware architecture, controllers may be computing devices that include, in addition to processors and memory, one or more input and/or output (I/O) device interface(s) that are communicatively coupled via a local interface. The local interface may include, for example but not limited to, one or more buses and/or other wired or wireless connections. The local interface may have additional elements, which are omitted for simplicity, such as controllers, buffers (caches), drivers, repeaters, and receivers to enable communications. Further, the local interface may include address, control, and/or data connections to enable appropriate communications among the aforementioned components.

In operation, processors can be configured to execute software stored within the memory, to communicate data to and from the memory, and to generally control operations of the computing device pursuant to the software. Software in memory, in whole or in part, may be read by the processors, perhaps buffered within the processor, and then executed. The processors may be hardware devices for executing software, particularly software stored in memory. The processors may be a custom made or commercially available processors, central processing units (CPU), auxiliary processors among several processors associated with the computing device, semiconductor based microprocessors (in the form of microchips or chip sets), or generally any such devices for executing software.

The memory can include any one or combination of volatile memory elements (e.g., random access memory (RAM, such as DRAM, SRAM, SDRAM, VRAM, etc.)) and/or nonvolatile memory elements (e.g., ROM, hard drive, tape, CDROM, etc.). Moreover, the memory may incorporate electronic, magnetic, optical, and/or other types of storage media. Note that the memory can also have a distributed architecture, where various components are situated remotely from one another, but can be accessed by the processor.

The software in the memory may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The Input/Output devices that may be coupled to system I/O Interface(s) may include input devices, such as a keyboard, mouse, scanner, microphone, camera, proximity device, etc. Further, the Input/Output devices may also include output devices, for example but not limited to, a printer, display, etc. Finally, the Input/Output devices may further include devices that communicate both as inputs and outputs, for instance, but not limited to, a modulator/demodulator (modem; for accessing another device, system, or network), a radio frequency (RF) or other transceiver, a telephonic interface, a bridge, a router, etc.

One should note that the above disclosed architecture, functionality, and/or hardware operations may be implemented by software. In software, such functionality may be represented as a module, segment, or portion of code, which comprises one or more executable instructions for implementing the specified logical function(s). It should also be noted that such modules may not necessarily be executed in any particular order and/or executed at all.

One should note that any of the functionality described herein can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" contains, stores, communicates, propagates and/or transports the program for use by or in connection with the instruction execution system, apparatus, or device. The computer readable medium can be, for example but not limited to, an electronic, magnetic, optical, electromagnetic, infrared, or semiconductor system, apparatus, or device. More specific examples (a non-exhaustive list) of a computer-readable medium include a portable computer diskette (magnetic), a random access memory (RAM) (electronic), a read-only memory (ROM) (electronic), an erasable programmable read-only memory (EPROM or Flash memory) (electronic), and a portable compact disc read-only memory (CDROM) (optical).

The term "about" is intended to include the degree of error associated with measurement of the particular quantity based upon the equipment available at the time of filing the application. The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made for elements thereof without departing from the scope of the present disclosure as defined by the appended claims. In addition, many modifications may be made to adapt a particular situation or material to the teachings of the present invention without departing from the essential scope thereof as defined by the appended claims. Therefore, it is intended that the present invention not be limited to the particular embodiment disclosed as the best mode contemplated for carrying out this present disclosure, but that the present invention will include all embodiments falling within the scope of the claims.

## Claims

1. A transportation refrigeration unit, TRU (104), for conditioning air in a cargo box (106), the TRU (104) comprising:
a TRU controller (108) that is electronically connected to a truck engine controller (170),
wherein when a delta between a cargo box (106) temperature and a cargo box set point temperature is greater than a predetermined threshold, the TRU controller (108):
actuates the truck engine (168) when the truck engine (168) is off after determining that predetermined safety conditions are satisfied, and
conditions air in the cargo box (106) to return the cargo box temperature to the set point temperature, **characterized in that** the predetermined safety conditions include an amount of fuel onboard the truck (164) being above a threshold amount, and wherein the TRU (104) is engineless.

2. The transportation refrigeration unit (104) of claim 1, wherein while the truck engine (168) is actuated, the TRU controller (108) draws power from the truck engine (168) to power TRU components until the cargo box temperature is proximate the set-point temperature.

3. The transportation refrigeration unit (104) of claim 2, wherein the TRU controller (108) turns the engine (168) off when the cargo box temperature is proximate the set point temperature.

4. The transportation refrigeration unit (104) according to any of the preceding claims wherein the TRU controller (108) determines that the truck engine (168) is actuated and thereafter draws power from the truck engine (168) to power the TRU components until the cargo box temperature is proximate the set-point temperature.

5. The transportation refrigeration unit (104) according to any of claims 1 to 4 wherein the TRU (104) includes a thermometer (152) in the cargo box (106), the thermometer (152) being in electronic communication with the TRU controller (108), and the actual temperature in the cargo box (106) is temperature read dynamically by the TRU controller (108) in communication with the thermometer.

6. The transportation refrigeration unit (104) according to any of claims 1 to 5 wherein the TRU controller (108) communicates with the truck engine (168) controller (170) over a controller area network, CAN.

7. The transportation refrigeration unit (104) according to any of claims 1 to 6 wherein the TRU components include a compressor (116), an evaporator (120), a condenser (120), and a fan (124).

8. A method for maintaining a cargo box set point temperature with a transportation refrigeration unit, TRU (104), wherein the TRU (104) includes a TRU controller (108), electronically connected to a truck engine controller (170),
wherein the method comprises:
the TRU controller (108) determining (S200) when a delta between a cargo box temperature and a cargo box set point temperature is greater than a predetermined threshold, the TRU controller (108),
actuating (S500) the truck engine (168) when the truck engine (168) is off after determining that predetermined safety conditions are satisfied, and
conditioning (S208) air in the cargo box (106) to return the cargo box temperature to the set point temperature, **characterized in that** the predetermined safety conditions include an amount of fuel onboard the truck (164) being above a threshold amount, and wherein the TRU (104) is engineless.

9. The method of claim 8, wherein while the truck engine (168) is actuated, the TRU controller (108) draws power from the truck engine (168) to power TRU components until the cargo box temperature is proximate the set-point temperature.

10. The method of claim 8, wherein the TRU controller (108) turns the engine (168) off when the cargo box temperature is proximate the set point temperature.

11. The method according to any of claims 8 to 10 wherein the TRU controller (108) determines that the truck engine (168) is actuated and thereafter draws power from the truck engine (168) to power the TRU components until the cargo box temperature is proximate the set-point temperature.

12. The method according to any of claims 8 to 11 wherein the TRU (104) includes a thermometer (152) in the cargo box (106), the thermometer (152) being in electronic communication with the TRU controller (108), and the actual temperature in the cargo box (106) is temperature read dynamically by the TRU controller (108) in communication with the thermometer.

13. The method according to any of claims 8 to 12 wherein the TRU controller (108) communicates with the truck engine controller (170) over a controller area network, CAN.

14. The method according to any of claims 8 to 13 the TRU components include a compressor (116), an evaporator (120), a condenser (120), and a fan (124).

## Patentansprüche

1. Transportkühleinheit (TRU) (104) zum Konditionieren von Luft in einem Frachtbehälter (106), wobei die TRU (104) Folgendes umfasst:
ein TRU-Steuergerät (108), das elektronisch mit einem Lkw-Motorsteuergerät (170) verbunden ist,
wobei, wenn eine Differenz zwischen der Temperatur eines Frachtbehälters (106) und einer Solltemperatur des Frachtbehälters größer als ein vorbestimmter Schwellenwert ist, das TRU-Steuergerät (108):
den Lkw-Motor (168) betätigt, wenn der Lkw-Motor (168) ausgeschaltet ist, nachdem festgestellt wurde, dass vorbestimmte Sicherheitsbedingungen erfüllt sind, und
die Luft im Frachtbehälter (106) konditioniert, um die Temperatur des Frachtbehälters auf die Solltemperatur zurückzubringen, **dadurch gekennzeichnet, dass** die vorbestimmten Sicherheitsbedingungen eine Kraftstoffmenge an Bord des Lkw (164) einschließen, die über einer Schwellenwertmenge liegt, und wobei das TRU (104) motorlos ist.

2. Transportkühleinheit (104) nach Anspruch 1, wobei das TRU-Steuergerät (108), während der Lkw-Motor (168) betätigt wird, Energie vom Lkw-Motor (168) bezieht, um TRU-Komponenten anzutreiben, bis die Temperatur des Frachtbehälters in der Nähe der Soll-Temperatur liegt.

3. Transportkühleinheit (104) nach Anspruch 2, wobei das TRU-Steuergerät (108) den Motor (168) ausschaltet, wenn die Temperatur des Frachtbehälters in der Nähe der Sollwerttemperatur liegt.

4. Transportkühleinheit (104) nach einem der vorhergehenden Ansprüche, wobei das TRU-Steuergerät (108) feststellt, dass der Lkw-Motor (168) betätigt wird, und daraufhin dem Lkw-Motor (168) Energie entnimmt, um die TRU-Komponenten anzutreiben, bis die Temperatur des Frachtbehälters in der Nähe der Solltemperatur liegt.

5. Transportkühleinheit (104) nach einem der Ansprüche 1 bis 4, wobei das TRU (104) ein Thermometer (152) im Frachtbehälter (106) beinhaltet, das Thermometer (152) elektronisch mit dem TRU-Steuergerät (108) kommuniziert und die Ist-Temperatur im Frachtbehälter (106) dynamisch von dem TRU-Steuergerät (108) abgelesen wird, das mit dem Thermometer kommuniziert.

6. Transportkühleinheit (104) nach einem der Ansprüche 1 bis 5, wobei das TRU-Steuergerät (108) über ein Controller Area Network (CAN) mit dem Steuergerät (170) des Lkw-Motors (168) kommuniziert.

7. Transportkühleinheit (104) nach einem der Ansprüche 1 bis 6, wobei die TRU-Komponenten einen Kompressor (116), einen Verdampfer (120), einen Kondensator (120) und einen Ventilator (124) umfassen.

8. Verfahren zur Aufrechterhaltung einer Solltemperatur eines Frachtbehälters mit einer Transportkühleinheit (TRU) (104), wobei die TRU (104) ein TRU-Steuergerät (108) umfasst, das elektronisch mit einem Lkw-Motorsteuergerät (170) verbunden ist,
wobei das Verfahren Folgendes umfasst:
Bestimmen (S200) durch das TRU-Steuergerät (108), wenn eine Differenz zwischen der Temperatur eines Frachtbehälters und einer Solltemperatur des Frachtbehälters größer als ein vorbestimmter Schwellenwert ist
Betätigen (S500) durch das TRU-Steuergerät (108) des Lkw-Motors (168), wenn der Lkw-Motor (168) ausgeschaltet ist, nachdem festgestellt wurde, dass vorbestimmte Sicherheitsbedingungen erfüllt sind, und
Konditionieren (S208) der Luft im Frachtbehälter (106), um die Temperatur des Frachtbehälters auf die Solltemperatur zurückzubringen, **dadurch gekennzeichnet, dass** die vorbestimmten Sicherheitsbedingungen eine Kraftstoffmenge an Bord des Lkw (164) einschließen, die über einer Schwellenwertmenge liegt, und wobei das TRU (104) motorlos ist.

9. Verfahren nach Anspruch 8, wobei, während der Lkw-Motor (168) betätigt wird, das TRU-Steuergerät (108) Energie vom Lkw-Motor (168) bezieht, um die TRU-Komponenten anzutreiben, bis die Temperatur des Frachtbehälters in der Nähe der Soll-Temperatur liegt.

10. Verfahren nach Anspruch 8, wobei das TRU-Steuergerät (108) den Motor (168) ausschaltet, wenn die Temperatur des Frachtbehälters in der Nähe der Solltemperatur liegt.

11. Verfahren nach einem der Ansprüche 8 bis 10, wobei das TRU-Steuergerät (108) feststellt, dass der Lkw-Motor (168) in Betrieb ist, und daraufhin dem Lkw-Motor (168) Energie entnimmt, um die TRU-Komponenten anzutreiben, bis die Temperatur des Frachtbehälters in der Nähe der Solltemperatur liegt.

12. Verfahren nach einem der Ansprüche 8 bis 11, wobei das TRU (104) ein Thermometer (152) im Frachtbehälter (106) beinhaltet, das Thermometer (152) elektronisch mit dem TRU-Steuergerät (108) kommuniziert und die Ist-Temperatur im Frachtbehälter (106) dynamisch von dem TRU-Steuergerät (108) abgelesen wird, das mit dem Thermometer kommuniziert.

13. Verfahren nach einem der Ansprüche 8 bis 12, wobei das TRU-Steuergerät (108) über ein Controller Area Network (CAN) mit dem Lkw-Motorsteuergerät (170) kommuniziert.

14. Verfahren nach einem der Ansprüche 8 bis 13, wobei die TRU-Komponenten einen Kompressor (116), einen Verdampfer (120), einen Kondensator (120) und einen Ventilator (124) umfassen.

## Revendications

1. Unité de réfrigération de transport, TRU (104), pour conditionner l'air dans une caisse de chargement (106), la TRU (104) comprenant :
un contrôleur de TRU (108) qui est connecté électroniquement à un contrôleur de moteur de camion (170),
dans lequel, lorsqu'un delta entre une température de la caisse de chargement (106) et une température de consigne de la caisse de chargement est supérieur à un seuil prédéterminé, le contrôleur de TRU (108) :
actionne le moteur de camion (168) lorsque le moteur de camion (168) est éteint après la détermination que des conditions de sécurité prédéterminées sont satisfaites, et
conditionne l'air dans la caisse de chargement (106) pour ramener la température de la caisse de chargement à la température de consigne, **caractérisée par le fait que** les conditions de sécurité prédéterminées comportent une quantité de carburant à bord du camion (164) supérieure à une quantité de seuil, et dans laquelle la TRU (104) n'a pas de moteur.

2. Unité de réfrigération de transport (104) selon la revendication 1, dans laquelle, lorsque le moteur de camion (168) est actionné, le contrôleur de TRU (108) tire de l'énergie du moteur de camion (168) pour alimenter les composants de TRU jusqu'à ce que la température de la caisse de chargement soit proche de la température de consigne.

3. Unité de réfrigération de transport (104) selon la revendication 2, dans laquelle le contrôleur de TRU (108) éteint le moteur (168) lorsque la température de la caisse de chargement est proche de la température de consigne.

4. Unité de réfrigération de transport (104) selon l'une quelconque des revendications précédentes dans laquelle le contrôleur de TRU (108) détermine que le moteur de camion (168) est actionné et tire ensuite de l'énergie du moteur de camion (168) pour alimenter les composants de TRU jusqu'à ce que la température de la caisse de chargement soit proche de la température de consigne.

5. Unité de réfrigération de transport (104) selon l'une quelconque des revendications 1 à 4, dans laquelle la TRU (104) comporte un thermomètre (152) dans la caisse de chargement (106), le thermomètre (152) étant en communication électronique avec le contrôleur de TRU (108), et la température réelle dans la caisse de chargement (106) est la température lue dynamiquement par le contrôleur de TRU (108) en communication avec le thermomètre.

6. Unité de réfrigération de transport (104) selon l'une quelconque des revendications 1 à 5, dans laquelle le contrôleur de TRU (108) communique avec le contrôleur (170) du moteur de camion (168) par l'intermédiaire d'un réseau de contrôleurs, CAN.

7. Unité de réfrigération de transport (104) selon l'une quelconque des revendications 1 à 6, dans laquelle les composants de TRU comportent un compresseur (116), un évaporateur (120), un condenseur (120) et un ventilateur (124).

8. Procédé pour maintenir une température de consigne de caisse de chargement avec une unité de réfrigération de transport, TRU (104), dans lequel la TRU (104) comporte un contrôleur de TRU (108), connecté électroniquement à un contrôleur de moteur de camion (170),
dans lequel le procédé comprend :
le contrôleur de TRU (108) déterminant (S200) lorsqu'un delta entre une température de caisse de chargement et une température de consigne de caisse de chargement est supérieur à un seuil prédéterminé, le contrôleur de TRU (108),
actionnant (S500) le moteur de camion (168) lorsque le moteur de camion (168) est éteint après détermination que les conditions de sécurité prédéterminées sont satisfaites, et
conditionnant (S208) l'air dans la caisse de chargement (106) pour ramener la température de la caisse de chargement à la température de consigne, **caractérisé par le fait que** les conditions de sécurité prédéterminées comportent une quantité de carburant à bord du camion (164) supérieure à une quantité de seuil, et que la TRU (104) n'a pas de moteur.

9. Procédé selon la revendication 8, dans lequel, pendant que le moteur de camion (168) est actionné, le contrôleur de TRU (108) tire de l'énergie du moteur de camion (168) pour alimenter les composants de TRU jusqu'à ce que la température de la caisse de chargement soit proche de la température de consigne.

10. Procédé selon la revendication 8, dans lequel le contrôleur de TRU (108) coupe le moteur (168) lorsque la température de la caisse de chargement est proche de la température de consigne.

11. Procédé selon l'une quelconque des revendications 8 à 10 dans lequel le contrôleur de TRU (108) détermine que le moteur de camion (168) est actionné et tire ensuite de l'énergie du moteur de camion (168) pour alimenter les composants de TRU jusqu'à ce que la température de la caisse de chargement soit proche de la température de consigne.

12. Procédé selon l'une quelconque des revendications 8 à 11, dans lequel la TRU (104) comporte un thermomètre (152) dans la caisse de chargement (106), le thermomètre (152) étant en communication électronique avec le contrôleur de la TRU (108), et la température réelle dans la caisse de chargement (106) est la température lue dynamiquement par le contrôleur de la TRU (108) en communication avec le thermomètre.

13. Procédé selon l'une quelconque des revendications 8 à 12, dans lequel le contrôleur de TRU (108) communique avec le contrôleur de moteur de camion (170) par l'intermédiaire d'un réseau de contrôleurs (CAN).

14. Procédé selon l'une quelconque des revendications 8 à 13, les composants de TRU comportent un compresseur (116), un évaporateur (120), un condenseur (120) et un ventilateur (124).
